# EUROPÄISCHE PATENTSCHRIFT

(11) **EP 2 543 561 B1**
(45) Veröffentlichungstag und Bekanntmachung des Hinweises auf die Patenterteilung: **29.03.2017**
(21) Anmeldenummer: 12004548.9
(22) Anmeldetag: 16.06.2012
(51) Int. Cl.: B60R 25/04

(54) **Verfahren und System zur Überprüfung einer Fahrberechtigung für ein Fahrzeug**
Method and system for checking the driving authorisation for a vehicle
Procédé et système de vérification de l'autorisation de conduire un véhicule

(30) Priorität: 06.07.2011 DE 102011106800
(43) Veröffentlichungstag der Anmeldung: 09.01.2013
(73) Patentinhaber: Volkswagen AG, 38436 Wolfsburg (DE)
(72) Erfinder: Langnickel, Mirko, 10243 Berlin (DE); Müller, Maik, 04420 Markranstädt (DE); Haupt, Hannes, 38106 Braunschweig (DE); Muth, Oliver, 10317 Berlin (DE); Dietz, Jan-Peter, 24161 Altenholz (DE); Thiele, Andreas, 38442 Wolfsburg (DE)

(56) Entgegenhaltungen:
- EP-A1- 1 286 297
- DE-A1- 19 729 404
- DE-A1- 19 814 964
- DE-A1- 19 838 421
- DE-C1- 4 414 216
- FR-A1- 2 837 444
- US-A1- 2004 217 850
- US-A1- 2006 076 834

## Beschreibung

Die vorliegende Erfindung betrifft ein Verfahren, um eine Fahrberechtigung eines Fahrers für ein Fahrzeug zu überprüfen, sowie ein entsprechend ausgestaltetes System und ein entsprechend ausgestaltetes Fahrzeug.

Die EP 1 286 297 A1 beschreibt eine Authentifizierung einer Person für ein Fahrzeug. Dabei werden sowohl Signale einer tragbaren Einheit als auch biometrische Informationen eines Benutzers erfasst und ausgewertet. Gemäß einer Ausführungsform wird die tragbare Einheit in einem Bereich von 50 cm bezüglich des Lenkrads gesucht.

Die DE 197 29 404 A1 offenbart eine Sicherungseinrichtung gegen eine unbefugte Benutzung eines Kraftfahrzeugs, wobei anhand von biometrischen Merkmalen, wie Körpergewicht oder Körperlänge, eine Berechtigung eines Benutzers überprüft wird.

Die DE 198 38 412 A1 beschreibt eine Zugangskontrolleinrichtung zu einem Kraftfahrzeug. Dabei werden biometrische Merkmale eines Benutzers erfasst und ausgewertet. Wenn der Benutzer dadurch erkannt wird, wird ein berechtigter Codegeber gesucht. Wenn auch dieser erfasst wird, wird ein Sicherheitsaggregat freigegeben.

Die US 6,831,993 B2 beschreibt ein Fahrzeug, welches gestartet wird, wenn Eigenschaften eines Gesichts mittels einer Kamera erfasst werden und diese Eigenschaften mit im Fahrzeug abgespeicherten Eigenschaften übereinstimmen.

Die US 5,938,706 beschreibt ein Fahrzeug, welches gestartet wird, wenn der Fingerabdruck und die Fotodaten einer Person erfasst und mit entsprechend gespeicherten Daten übereinstimmen.

Die DE 44 14 216 C1 beschreibt eine Fremdnutzungsschutzeinrichtung für ein Kraftfahrzeug, mittels welcher das Kraftfahrzeug nur gestartet werden kann, wenn zum einen eine Übereinstimmung von einer Ist- und einer Soll-Gesichtsfeldinformation erkannt und zum anderen ein für das Kraftfahrzeug gültiger Schlüssel, beispielsweise über eine drahtlose Infrarotübertragungsstrecke, erfasst wird.

Ausgehend von dem oben beschriebenen Stand der Technik stellt sich die vorliegende Erfindung die Aufgabe, die Fahrberechtigung für ein Fahrzeug möglichst einfach und komfortabel zu überprüfen, wobei aber auch die Fahrberechtigung erteilt werden kann, wenn der Fahrer, aus welchen Gründen auch immer, die komfortable Variante nicht nutzen möchte.

Erfindungsgemäß wird diese Aufgabe durch ein Verfahren zur Überprüfung einer Fahrberechtigung für ein Fahrzeug nach Anspruch 1, durch ein System zur Überprüfung einer Fahrberechtigung für ein Fahrzeug nach Anspruch 6 und durch ein Fahrzeug nach Anspruch 9 gelöst. Die abhängigen Ansprüche definieren bevorzugte und vorteilhafte Ausführungsformen der vorliegenden Erfindung.

Im Rahmen der vorliegenden Erfindung wird ein Verfahren zur Überprüfung einer Fahrberechtigung für ein Fahrzeug bereitgestellt. Dieses Verfahren umfasst folgende Schritte:
- Erfassen biometrischer Merkmale einer Person, welche auf einem Fahrersitz des Fahrzeugs sitzt.
- Vergleichen der biometrischen Merkmale mit gespeicherten biometrischen Merkmalen, welche für eine oder für mehrere Personen mit der Fahrberechtigung für das Fahrzeug im Fahrzeug gespeichert sind. Dazu werden biometrische Merkmale, welche für die Person auf dem Fahrersitz erfasst wurden, beispielsweise mit Datensätzen in einer Datenbank verglichen, wobei jeder dieser Datensätze biometrische Merkmale umfasst, welche jeweils einer Person mit der Fahrberechtigung für das Fahrzeug zugeordnet sind.
- Suchen eines für das Fahrzeug berechtigten Schlüssels. Diese Suche erfolgt im Normalfall über Funk, so dass dabei auch ein in der Hosentasche des Fahrers befindlicher Schlüssel erfasst wird, ohne dass der Fahrer diesen dazu aktiv betätigen muss. Erfindungsgemäß wird allerdings auch ein in einem Zündschloss des Fahrzeugs eingesteckter Schlüssel als berechtigter Schlüssel erfasst.
- Positives Erkennen der Fahrberechtigung, wenn zum einen beim Vergleich der gespeicherten biometrischen Merkmale die gespeicherten biometrischen Merkmale für eine Person mit der Fahrberechtigung gefunden werden, welche mit den biometrischen Merkmalen, die für die auf dem Fahrersitz befindlichen Person erfasst wurden, übereinstimmen, und wenn zum anderen der für das Fahrzeug berechtigte Schlüssel gefunden wird.

Vorteilhafterweise existieren zwei verschiedene Varianten, um die Fahrberechtigung für das Fahrzeug zu erhalten. Gemäß der ersten Variante müssen die biometrischen Merkmale, welche von dem potentiellen Fahrer erfasst werden, mit biometrischen Merkmalen übereinstimmen, welche im Fahrzeug abgespeichert sind. Darüber hinaus wird gemäß der ersten Variante die Fahrberechtigung nur dann erteilt, wenn gleichzeitig ein für das Fahrzeug berechtigter Schlüssel insbesondere über Funk erfasst wird, wobei mit Hilfe dieses Schlüssel die Wegfahrsperre des Fahrzeugs deaktiviert werden kann. Gemäß der zweiten Variante wird die Fahrberechtigung allerdings auch dann erteilt, wenn der berechtigte Schlüssel in dem Zündschloss des Fahrzeugs erfasst wird.

Die vorliegende Erfindung ermöglicht somit vorteilhafterweise, dass das Fahrzeug von jeder Person benutzt werden kann, welche den berechtigten Schlüssel mit sich führt, welcher in das Zündschloss des Fahrzeugs gesteckt werden kann. Darüber hinaus ist auch die Nutzung des Fahrzeugs für eine Person möglich, welche ihre biometrischen Merkmale nicht im Fahrzeug hinterlegt wissen möchte.

Vorteilhafterweise wird der für das Fahrzeug berechtigte Schlüssel nur dann in dem Zündschloss des Fahrzeugs gesucht, wenn die erfassten biometrischen Merkmale, welche von dem auf dem Fahrersitz befindlichen Person erfasst worden, mit keinen biometrischen Merkmalen übereinstimmen, welche im Fahrzeug abgespeichert sind.

Im Rahmen der vorliegenden Erfindung kann auch ein weiteres Verfahren zur Überprüfung einer Fahrberechtigung für ein Fahrzeug bereitgestellt werden, welches folgende Schritte umfasst:
- Erfassen biometrischer Merkmale einer Person, welche auf dem Fahrersitz des Fahrzeugs sitzt.
- Vergleichen der erfassten biometrischen Merkmale mit biometrischen Merkmalen, welche für eine oder für mehrere Personen mit der Fahrberechtigung im Fahrzeug gespeichert sind.
- Suchen eines für das Fahrzeug berechtigten Schlüssels über Funk im Bereich des Fahrzeugs.
- Positives Erkennen der Fahrberechtigung, wenn zum einen bei dem Vergleich die erfassten biometrischen Merkmale mit biometrischen Merkmalen übereinstimmen, welche für eine Person mit der Fahrberechtigung im Fahrzeug gespeichert sind, und wenn zum anderen der für das Fahrzeug berechtigte Schlüssel über Funk im Bereich des Fahrzeugs gefunden wird.

Bei einem Verfahren nach dem Stand der Technik, welches ohne die Erfassung biometrischer Merkmale, aber einer Schlüsselerfassung über Funk arbeitet, darf die Fahrberechtigung für ein Fahrzeug nur dann erteilt werden, wenn beim Start des Fahrzeugs ein für das Fahrzeug berechtigter Schlüssel im Innenraum des Fahrzeugs erfasst wird. Damit wird beispielsweise verhindert, dass ein Kind durch Betätigen des Startknopfes des Fahrzeugs den Motor des Fahrzeugs startet, während sich der eigentliche Fahrer des Fahrzeugs mit einem berechtigten Schlüssel in der Nähe des Fahrzeugs, aber außerhalb des Fahrzeugs befindet. Diese nach dem Stand der Technik erforderliche genaue Schlüsselortung, welche zwischen einem Fahrzeug-Innenbereich und einem Fahrzeug-Außenbereich bei der Schlüsselortung unterscheidet, erfordert den Einsatz mehrerer Antennen innerhalb und gegebenenfalls auch außerhalb des Fahrzeugs, wobei zusätzlich zur Systemaktivierung bisweilen auch kapazitive Sensoren in den Türgriffen eingesetzt werden. Indem erfindungsgemäß das Fahrzeug nur dann mit einem über Funk erfassten Schlüssel gestartet werden kann, wenn dabei von dem Fahrer erfasste biometrische Merkmale erfolgreich mit im Fahrzeug abgespeicherten biometrischen Merkmalen verglichen worden sind, ist sichergestellt, dass sich ein berechtigter Fahrer (und kein Kind) beim Start des Fahrzeugs auf dem Fahrersitz befindet. Daher reicht es völlig aus, wenn der Schlüssel beispielsweise mit einer im Innenraum des Fahrzeugs angeordneten Antenne (z.B. einer LF-Antenne ("Low frequency"), die z.B. bei 125 kHz arbeitet) im Bereich des Fahrzeugs (d.h. bevorzugt im Innenraum, aber auch im fahrzeugnahen Außenbereich) erfasst wird. Die nach dem Stand der Technik komplizierte Schlüsselortung mit mehreren Antennen ist vorteilhafterweise bei der vorliegenden Erfindung nicht erforderlich.

In dem Fall, dass beim Vergleich der erfassten biometrischen Merkmale mit den gespeicherten biometrischen Merkmalen keine gespeicherten biometrischen Merkmale erkannt werden, welche mit den erfassten biometrischen Merkmalen übereinstimmen, wird ein Anlernen (d.h. ein Abspeichern der erfassten biometrischen Merkmale) vorgenommen, wenn beide folgenden Bedingungen erfüllt sind:
- Eine Zustimmung der auf dem Fahrersitz befindlichen Person wird erfasst, was beispielsweise durch die Betätigung eines Knopfes oder durch eine entsprechende Eingabe in eine Multifunktionsanzeige des Fahrzeugs ermöglicht wird.
- Der für das Fahrzeug berechtigte Schlüssel wird in dem Zündschloss des Fahrzeugs erfasst.

Dies bietet zum einen den Vorteil, dass Personen, welche die Fahrberechtigung nicht über das Erfassen Ihrer biometrischen Merkmale erteilen möchten, vorteilhafterweise nicht befürchten müssen, dass ihre biometrischen Merkmale dennoch langfristig quasi automatisch in dem Fahrzeug abgespeichert werden. Darüber hinaus ist das erfindungsgemäße Anlernen einer neuen Person sehr einfach möglich, indem der normale Fahrzeugschlüssel in das Zündschloss gesteckt wird. Es ist also vorteilhafterweise kein Spezialschlüssel und auch kein Spezialwissen für das Anlernen notwendig.

Darüber hinaus bietet die vorliegende Erfindung die Möglichkeit, dass die biometrischen Merkmale, welche von der auf dem Fahrersitz befindlichen Person erfasst werden, auf eine allgemeine Berechtigung zum Führen eines Fahrzeugs hin untersucht werden. Die Fahrberechtigung wird dabei nur dann erteilt, wenn mittels der biometrischen Merkmale der Person erkannt wird, dass diese Person die allgemeine Berechtigung besitzt. Dabei kann die allgemeine Berechtigung beispielsweise in folgenden Fällen nicht erteilt werden:
- Anhand der biometrischen Merkmale wird erkannt, dass das Alter der Person unterhalb einer Schwelle liegt, ab welcher das Führen des Fahrzeugs erlaubt ist.
- Anhand der biometrischen Merkmale wird erkannt, dass der aktuelle Zustand der Person ein Führen des Fahrzeugs (beispielsweise aufgrund von Drogenkonsum oder Übermüdung) nicht ermöglicht.

Die biometrischen Merkmale umfassen dabei insbesondere Gesichtsmerkmale eines Menschen. Diese Gesichtsmerkmale können dabei mit einem optischen Sensor (z. B. mit einer Kamera) erfasst werden, welcher sich im Innenraum des Fahrzeugs befindet.

Dabei kann beispielsweise mit einer Fahrzeug-Innenraumkamera ein Video erstellt werden, welches im Wesentlichen den Kopf der im Fahrersitz befindlichen Person zeigt. Mittels einer Gesichtssuche wird innerhalb dieses Videos die Gesichtsposition und das Bild des Gesichts erfasst, woraus mittels einer Augenerfassungsvorrichtung das Bild mit entsprechenden Augenpositionen versehen wird, bevor das Bild einer entsprechenden Qualitätsprüfung unterzogen wird. Wenn die Qualitätsprüfung zu einem positiven Ergebnis kommt, wird eine Normalisierung des Gesichts durchgeführt, wodurch ein normalisiertes Gesichtsbild entsteht, welches von einer Vorverarbeitung verarbeitet wird, welche ein vorverarbeitetes Bild erzeugt, das einer Merkmalsextraktion zugeführt wird. Die Ausgabe dieser Merkmalsextraktion umfasst ein so genanntes Referenzmuster (Template), welches aus bis zu fünf Bildern besteht.

Bei einem Vergleich des Templates, welches von der auf dem Fahrersitz befindlichen Person erstellt wird, mit einem in der Datenbank hinterlegten Template werden folgende Werte ermittelt:
- Der Ähnlichkeitswert zwischen dem aktuellen Gesicht des Livebildes (des aktuell erfassten Templates) und einem abgespeicherten Frontalbild des zu vergleichenden Datensatzes (des gespeicherten Templates).
- Die Koordinaten der Augen des aktuell erfassten Templates.
- Die geschätzte Tiefe des Kopfes, welche aus geometrischen Verhältnissen im Gesicht der auf dem Fahrersitz erfassten Person bestimmt wird.
- Erstellung verschiedener Abbildungen, welche durch eine Rotation des Kopfes der auf dem Fahrersitz befindlichen Person als Abweichung von der Frontalposition erzeugt werden.
- Ein Augenöffnungsgrad in Prozent.

Diese Werte dienen zum einen dazu, die Qualität des erfassten Templates zu überprüfen, um gegebenenfalls ein neues Template zu erstellen. Zum anderen diesen diese Werte (insbesondere der Ähnlichkeitswert) dazu, ein Ergebnis des Vergleichs des aktuell erstellten Templates mit einem abgespeicherten Template zu liefern, um zu entscheiden, ob die auf dem Fahrersitz befindliche Person ein berechtigter Fahrer ist oder nicht.

Um ein Täuschen mit einer Kopie biometrischer Merkmale (beispielsweise mit einem Abbild des Gesichts eines berechtigten Fahrers) zu vermeiden, weist die vorliegende Erfindung vorteilhafterweise folgende Merkmale auf:
- Bei der Erfassung der biometrischen Merkmale der auf dem Fahrersitz befindlichen Person wird zwischen lebendigen Objekten und nicht lebendigen Objekten (Abbildungen (z. B. Fotos) einer Person, Puppen, usw.) unterschieden.
- Die biometrischen Merkmale der auf dem Fahrersitz befindlichen Person werden beispielsweise von einer Kamera in einer definierten räumlichen Entfernung von der Kamera erfasst, wodurch das Täuschen mittels entsprechender Bilder zumindest erschwert wird.
- Durch den Einsatz gepulster NIR-Beleuchtung ist die Täuschung mittels entsprechender Videos nahezu unmöglich.
- Durch den Einsatz wechselseitiger NIR-Beleuchtung zur Erkennung von räumlichen Objekten wird das Täuschen mit zweidimensionalen Abbildungen verhindert.
- Durch den Abgleich zwischen bekannten Verläufen einer Helligkeitsverteilung im auf dem Fahrersitz erfassten Gesicht und durch den Abgleich zwischen aufgebrachter Beleuchtung und der Helligkeitsverteilung in einem auf dem Fahrersitz erfassten Gesicht kann eine Täuschung mittels Fotos oder Videos nahezu ausgeschlossen werden.
- Durch die Auswertung intrinsischer Bewegungen (beispielsweise Kopfbewegungen oder Augenlidbewegungen über einen längeren Zeitraum kann eine Täuschung mittels Fotos oder mittels Puppen verhindert werden
- Eine Unterscheidung zwischen dem Fahrer und dem Beifahrer erfolgt über einen laufenden Vergleich zwischen entsprechenden Gesichtsähnlichkeiten. Beugt sich beispielsweise der Beifahrer in den Kamerabereich des Fahrersitzes, dann würde das erfindungsgemäße Verfahren keine Übereinstimmung mit einem in der Datenbank gespeicherten Datensatz erkennen und die Fahrberechtigung nicht erteilen.
- Auch die Erkennung von mehreren unterschiedlichen Gesichtern verhindert die Erteilung der Fahrberechtigung.

Das oben beschriebene Vorgehen zur Vermeidung einer Täuschung ("Fake Detection") verhindert, dass das erfindungsgemäße Verfahren mit einem Foto oder einer Puppe getäuscht wird, indem das erfasste Bild oder Video auf Dreidimensionalität, Augenblinzeln und Kopfrotation geprüft wird.

Die vorliegende Erfindung kann weiter abgesichert werden, indem zum Fahrzeugstart ein Kupplungspedal des Fahrzeugs (bei Fahrzeugen mit Schaltgetriebe) oder ein Bremspedal des Fahrzeugs (bei Fahrzeugen mit Automatikgetriebe) betätigt werden muss.

Im Rahmen der vorliegenden Erfindung wird auch ein System zur Überprüfung einer Fahrberechtigung für ein Fahrzeug bereitgestellt. Dabei umfasst das System einen Sensor, eine Antenne zum Erfassen von Funksignalen eines für das Fahrzeug berechtigten Schlüssels, ein Zündschloss und eine Steuerung mit einem Speicher. Mit Hilfe des Sensors erfasst das System biometrische Merkmale einer Person, welche auf einem Fahrersitz des Fahrzeugs sitzt. Die Steuerung vergleicht diese erfassten biometrischen Merkmale mit biometrischen Merkmalen, welche für eine oder für mehrere Personen mit der Fahrberechtigung in dem Speicher gespeichert sind. Wenn die Steuerung bei diesem Vergleich gespeicherte biometrische Merkmale für eine Person mit der Fahrberechtigung findet und wenn die Steuerung mit Hilfe der Antenne Funksignale des für das Fahrzeug berechtigten Schlüssels erfasst, erteilt das System die Fahrberechtigung. Darüber hinaus kann das System die Fahrberechtigung erteilen, wenn die Steuerung den für das Fahrzeug berechtigten Schlüssel in dem Zündschloss erfasst.

Im Rahmen der vorliegenden Erfindung kann auch ein weiteres System zur Überprüfung einer Fahrberechtigung für ein Fahrzeug bereitgestellt werden. Das weitere System umfasst einen Sensor, mindestens eine Antenne zum Erfassen von Funksignalen eines für das Fahrzeug berechtigten Schlüssels und eine Steuerung mit einem Speicher. Die mindestens eine Antenne zum Erfassen der Funksignale ist im Innenraum des Fahrzeugs angeordnet. Mit dieser mindestens einen Antenne sucht die Steuerung nach einem für das Fahrzeug berechtigten Schlüssel. Darüber hinaus erfasst der Sensor biometrische Merkmale einer Person, welche sich auf dem Fahrersitz des Fahrzeugs befindet. Anschließend vergleicht die Steuerung diese erfassten biometrischen Merkmale mit biometrischen Merkmalen, welche für eine oder für mehrere Personen mit der Fahrberechtigung in dem Speicher abgespeichert sind. Wenn die Steuerung bei diesem Vergleich gespeicherte biometrische Merkmale für eine Person mit der Fahrberechtigung findet, erteilt die Steuerung die Fahrberechtigung, wenn gleichzeitig mit Hilfe der mindestens einen Antenne Funksignale des für das Fahrzeug berechtigten Schlüssels erfasst werden.

Die Vorteile des erfindungsgemäßen Systems und des erfindungsgemäßen weiteren Systems entsprechen im Wesentlichen den Vorteilen der beiden erfindungsgemäßen Verfahren, welche vorab im Detail ausgeführt sind, so dass hier auf eine Wiederholung verzichtet wird.

Schließlich wird im Rahmen der vorliegenden Erfindung ein Fahrzeug bereitgestellt, welches ein erfindungsgemäßes System umfasst.

Da gemäß der vorliegenden Erfindung die Fahrberechtigung mit Hilfe eines über Funk erfassten Schlüssels nur dann erteilt wird, wenn gleichzeitig die biometrischen Merkmale, welche von der im Fahrersitz befindlichen Person erfasst werden, ausreichend gut mit einem entsprechenden Datensatz in einer Datenbank des Fahrzeugs übereinstimmen, bietet die vorliegende Erfindung auch einen sehr guten Schutz gegen eine so genannte Relayattacke. Bei einer solchen Relayattacke wird die Funkstrecke zwischen dem berechtigten Schlüssel und dem Fahrzeug über weitere Antennen quasi verlängert und dann der Motor des Fahrzeugs durch eine Betätigung des Zündanlasstasters oder Startknopfes gestartet und das Fahrzeug dadurch entwendet. Da bei der vorliegenden Erfindung dazu dem Fahrzeug bekannte biometrische Merkmale bei der Person auf dem Fahrersitz erfasst werden müssten, ist eine solche Relayattacke zumindest deutlich erschwert. Auch eine Selbstregistrierung kann bei der vorliegenden Erfindung quasi nicht durchgeführt werden, da hierzu eine Verbindung zwischen dem berechtigten Schlüssel und der Transponderspule im Fahrzeug (im Zündschloss) hergestellt werden müsste. Für eine solche Kommunikation müsste die entsprechende Antenne in unmittelbare Umgebung (wenige Zentimeter) zum Schlüssel und zu der Transponderspule gebracht werden, was realistischerweise nicht möglich ist.

Bei der vorliegenden Erfindung dient der Schlüssel, welcher in das Zündschloss einführbar ist, immer als Rückfallmöglichkeit, so dass der Fahrzeugzutritt und der Fahrzeugstart von jeder Person durchgeführt werden kann, welche sich im Besitz des entsprechenden Schlüssels befindet. Dadurch wird ebenfalls eine freiwillige Nutzung (und keine verpflichtende Nutzung) der Erfassung der biometrischen Merkmale im Fahrzeug ermöglicht. Nur Personen, welche der Erfassung der biometrischen Merkmale aktiv (d.h. willentlich) zustimmen, können den entsprechenden Teil der vorliegenden Erfindung nutzen, während alle anderen Nutzer das Fahrzeug mit dem Zündschlüssel starten können, wie es nach dem Stand der Technik bekannt ist. Die erfindungsgemäß eingesetzte Datenbank mit berechtigten Benutzern des Fahrzeugs umfasst keine konkrete Zuordnung zu der entsprechenden Person, sondern dient nur dazu, die erfassten biometrischen Merkmale mit den Datensätzen der Datenbank zu vergleichen.

Bei der vorliegenden Erfindung können zeitintensive und benutzerunabhängige Schritte, wie beispielsweise eine Anpassung der Kamera, eine Qualitätsanalyse, eine Fake Detection und eine Bildauswahl, parallel durchgeführten werden.

Die vorliegende Erfindung ist insbesondere für Kraftfahrzeuge geeignet. Selbstverständlich ist die vorliegende Erfindung nicht auf diesen bevorzugten Anwendungsbereich beschränkt, da die vorliegende Erfindung auch bei Schiffen, Flugzeugen sowie gleisgebundenen oder spurgeführten Fahrzeugen eingesetzt werden kann.

Im Folgenden wird die vorliegende Erfindung anhand bevorzugter erfindungsgemäßer Ausführungsformen im Detail beschrieben.
Fig. 1a stellt einen Ablauf eines erfindungsgemäßen Verfahrens zur Überprüfung einer Fahrberechtigung für ein Fahrzeug dar, während die Figuren 1b bis 1f Bilder darstellen, welche im Rahmen des Ablaufs der Information des Fahrers dienen.
Fig. 2 stellt schematisch ein erfindungsgemäßes Fahrzeug mit einem erfindungsgemäßen System dar.

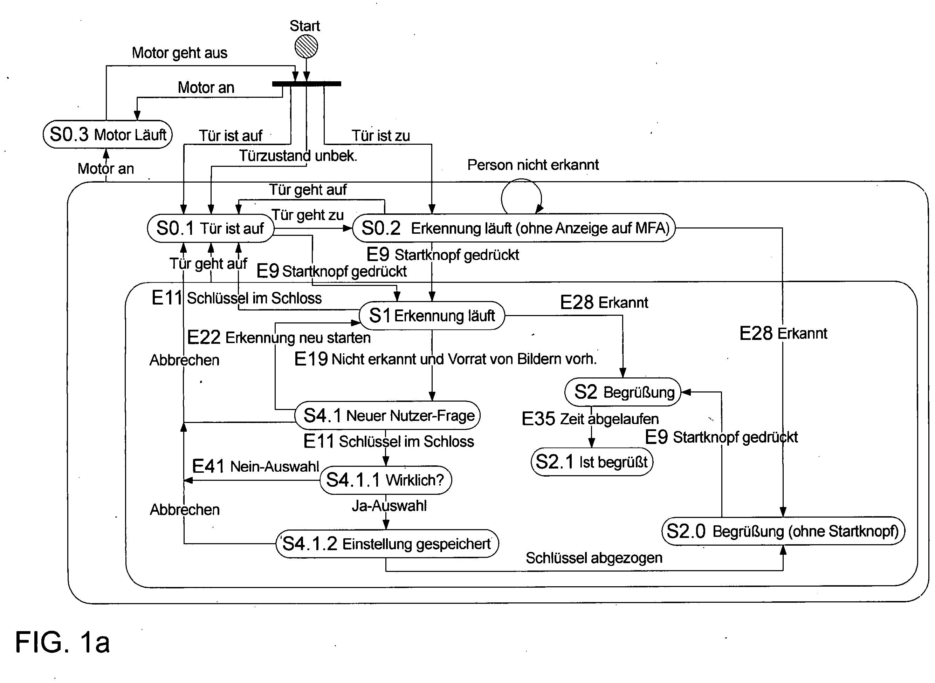

In Fig. 1a ist ein beispielhaftes Ablaufdiagramm eines erfindungsgemäßen Verfahrens dargestellt. Im Normalfall startet das Verfahren, indem der Fahrer das Fahrzeug über eine Funkfernbedienung oder ein Keyless-Entry-System entriegelt und eine Tür (insbesondere die Fahrertür) des Fahrzeugs öffnet, so dass das Verfahren in den Zustand S0.1 kommt. Sobald der Fahrer die Tür schließt, verzweigt das Verfahren in den Zustand S0.2, in welchem mittels einer optischen Sensorik (z. B. mit einer monokularen Kamera mit NIR-Beleuchtung ("Nahes InfraRot")) im Kombiinstrument des Fahrzeugs der Kopf des Fahrers (d.h. der Person, welche sich auf dem Fahrersitz befindet) erfasst wird, ohne dass die entsprechenden biometrischen Merkmale dauerhaft abgespeichert werden. Nach dem Erfassen der biometrischen Merkmale des Fahrers werden diese biometrischen Merkmale im Zustand S0.2 mit Datensätzen in einer Datenbank des Fahrzeugs verglichen, wobei jeder der in der Datenbank gespeicherten Datensätze biometrische Merkmale umfasst, welche jeweils einer Person mit der Fahrberechtigung für das Fahrzeug zugeordnet sind. Dieser Vorgang der Erfassung der biometrischen Merkmale des Fahrers und des Vergleichs mit den Datensätzen in der Datenbank wird bei dem in Fig. 1a dargestellten Ablaufdiagramm als "Erkennung" bezeichnet.

Die erfassten biometrischen Merkmale des Fahrers können beispielsweise ein Frontalbild des Fahrers mit sehr guten Qualitätseigenschaften oder eine Kombination von mehreren Bildern, bei welchen der Fahrer verschiedene Stellungen (Posen) einnimmt, umfassen.

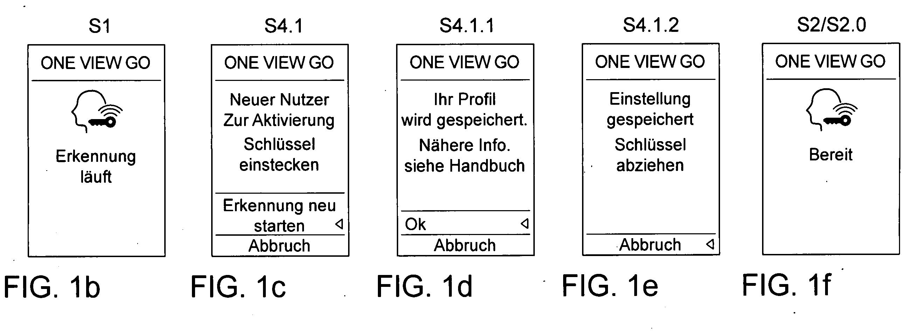

Wenn in dem Zustand S0.2 die Tür wieder geöffnet wird, wird die Erkennung abgebrochen und das Verfahren kehrt in den Zustand S0.1 zurück. Wenn dagegen in dem Zustand S0.2 ein Startknopf des Fahrzeugs, mit welchem der Motor des Fahrzeugs gestartet werden kann, gedrückt wird (Aktion E9), verzweigt das Verfahren in den Zustand S1, in welchem der Erkennungsvorgang weiter abläuft. Wenn in dem Zustand S0.2 ein passender Datensatz in der Datenbank gefunden wird (d.h. wenn bei dem Vergleich zwischen dem aktuellen Template (den erfassten biometrischen Merkmalen) und den hinterlegten Templates (gespeicherten Datensätzen) ein Ähnlichkeitswert (Match Score) berechnet wird, welcher oberhalb eines vorbestimmten Schwellenwerts liegt, verzweigt das Verfahren über die Aktion E28 in den Zustand S2.0, in welchem das in Fig. 1f dargestellte Bild zur Begrüßung des Fahrers im Kombiinstrument abgebildet wird. Aus dem Zustand S0.1 verzweigt das Verfahren direkt in den Zustand S1, wenn der Startknopf gedrückt wird. Während die Erkennung (Erfassen der biometrischen Merkmale und Vergleich mit abgespeicherten Datensätzen) im Zustand S0.2 ohne eine entsprechende Anzeige auf dem Kombiinstrument oder auf der Multifunktionsanzeige abläuft, wird in dem Zustand S1 das in Fig. 1b dargestellte Bild im Kombiinstrument abgebildet.

Wenn im Zustand S2.0 der Startknopf des Fahrzeugs gedrückt wird, verzweigt das Verfahren in den Zustand S2, in welchem (weiter) das in Fig. 1f dargestellte Bild im Kombiinstrument dargestellt wird. In den Zustand S2 verzweigt das Verfahren auch, wenn in dem Zustand S1 ein zu den erfassten biometrischen Merkmalen passender Datensatz in der Datenbank gefunden wird. In jedem Fall wird der Motor des Fahrzeugs in dem Zustand S2 gestartet, so dass das Verfahren im Normalfall (Motor startet ohne Probleme) nur kurz im Zustand S2 verbleibt und in den Zustand S0.3 kommt.

Wenn im Zustand S1 der berechtigte Schlüssel im Zündschloss des Fahrzeugs erfasst wird (Vorgang E11), wird die Erkennung abgebrochen und der Motor des Fahrzeugs kann durch eine entsprechende Bewegung des im Zündschloss befindlichen Schlüssels gestartet. Das Verfahren befindet sich im Zustand S0.1, solange der Moto nicht läuft.

Wenn im Zustand S1 die Erkennung zu einem negativen Ergebnis kommt, d.h. es wird kein Datensatz in der Datenbank gefunden, welcher bezüglich der erfassten biometrischen Merkmale einen Ähnlichkeitswert aufweist, der oberhalb des vorbestimmten Schwellenwerts liegt, dann verzweigt das Verfahren in den Zustand S4.1. In diesem Zustand S4.1, in welchem das Verfahren einen potentiellen neuen Nutzer erfasst hat, wird das in Fig. 1c dargestellte Bild im Kombiinstrument des Fahrzeugs abgebildet. Der Fahrer hat in diesem Zustand S4.1 drei Möglichkeiten:
1. Der Fahrer kann durch eine entsprechende Betätigung des Kombiinstruments die Erkennung neu starten (Vorgang E22), wodurch das Verfahren in den Zustand S1 zurückkehrt und den Erkennungsvorgang (insbesondere einschließlich einer neuen Erfassung der biometrischen Merkmale der auf dem Fahrersitz befindlichen Person) nochmals durchführt.
2. Der Fahrer kann durch eine entsprechende Betätigung des Kombiinstruments das Verfahren quasi abbrechen und dadurch in den Zustand S0.1 zurückkehren.
3. Der Fahrer kann den berechtigten Schlüssel in das Zündschloss des Fahrzeugs einführen (Vorgang E11), wodurch das Verfahren in den Zustand S4.1.1 gelangt.

In dem Zustand S4.1.1 wird in dem Kombiinstrument das in Fig. 1d dargestellte Bild abgebildet. In diesem Zustand S4.1.1 werden die biometrischen Merkmale des Fahrers als Datensatz in der Datenbank des Fahrzeugs hinterlegt, wenn der Fahrer die im Kombiinstrument dargestellte Abfrage (siehe Fig. 1d) positiv beantwortet, wodurch das Verfahren in den Zustand S4.1.2 verzweigt. Wenn der Fahrer dagegen die entsprechende Abfrage negativ quittiert (Vorgang E41) wird das Verfahren wiederum quasi abgebrochen und das Verfahren kommt in den Zustand S0.1.

In dem Zustand S4.1.2 wird das in Fig. 1e dargestellte Bild im Kombiinstrument des Fahrzeugs abgebildet. Der Fahrer wird dadurch darüber informiert, dass der Registriervorgang für seine Person positiv abgeschlossen und auch für ihn ab sofort der schlüssellose (ohne Schlüssel im Zündschloss) Fahrzeugstart möglich ist. Anders ausgedrückt informiert der Zustand S4.1.2 den Fahrer darüber, dass seine biometrischen Merkmale nunmehr als Datensatz in der Datenbank des Fahrzeugs abgespeichert worden sind, wodurch er zum Kreis der berechtigten Fahrer des Fahrzeugs gehört, welche das Fahrzeug auch ohne einen Schlüssel im Zündschloss des Fahrzeugs starten können. In dem Zustand S4.1.2 besitzt der Fahrer zwei Möglichkeiten. Entweder er bricht das Verfahren quasi ab, indem er das Kombiinstrument entsprechend betätigt, wodurch das Verfahren in den Zustand S0.1 zurückkehrt. Oder der Fahrer zieht den Zündschlüssel aus dem Zündschloss, wodurch das Verfahren in den Zustand S2.0 gelangt, in welchem der Fahrer das Fahrzeug durch die Betätigung des Startknopfes (Vorgang E9) starten kann.

Wenn in dem Zustand S2 ein vorbestimmtes Zeitinterval abgelaufen ist (Vorgang E35), gelangt das Verfahren in den Zustand S2.1, welcher sich nur dadurch von dem Zustand S2 unterscheidet, dass die in Fig. 1f dargestellte Abbildung im Zustand S2.1 nicht im Kombiinstrument dargestellt wird.

Es sei darauf hingewiesen, dass der Motor des Fahrzeugs in nahezu jedem Zustand (Ausnahmen sind die Zustände S0.3 und S 4.1.1) auch durch den in das Zündschloss eingeführten berechtigten Schlüssel gestartet werden kann. Darüber hinaus sei darauf hingewiesen, dass zur Erfassung der biometrischen Merkmale vorteilhafterweise keine zusätzliche Aktion des Fahrers notwendig ist.

Erfindungsgemäß kann jeder Benutzer jederzeit seine persönlichen Daten sowie die Daten aller Benutzer löschen, sofern sich ein für das Fahrzeug berechtigte Schlüssel in dem Zündschloss befindet. Über ein Auswahlmenü kann der berechtigte Nutzer dabei das seinem Gesicht ähnlichste Profil bzw. Template oder die Daten aller Personen löschen.

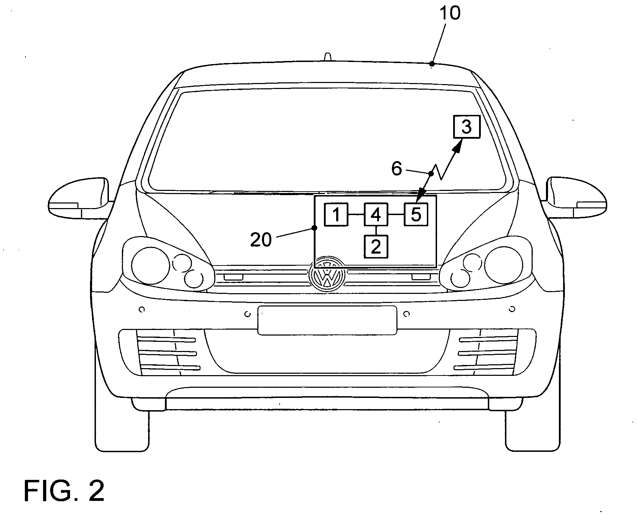

In Fig. 2 ist schematisch ein erfindungsgemäßes Fahrzeug 10 dargestellt, welches ein erfindungsgemäßes System 20 umfasst. Das erfindungsgemäße System 20 umfasst seinerseits eine Kamera, mit welcher Gesichtsmerkmale einer im Fahrersitz befindlichen Person aufgenommen werden können, eine Steuerung 4, eine LF-Antenne 5 und ein Zündschloss 2. Die LF-Antenne 5 ist in der Lage, LF-Funksignale eines im Fahrzeug 10 befindlichen Schlüssels 3 zu empfangen.

## Patentansprüche

1. Verfahren zur Überprüfung einer Fahrberechtigung für ein Fahrzeug (10),
wobei das Verfahren folgende Schritte umfasst:
• Erfassen biometrischer Merkmale einer Person, welche sich auf einem Fahrersitz des Fahrzeugs (10) befindet,
• Vergleichen der biometrischen Merkmale mit gespeicherten biometrischen Merkmalen für mindestens eine Person mit der Fahrberechtigung,
• Suchen eines für das Fahrzeug (10) berechtigten Schlüssels (3) über Funk (6) im Innenraum und fahrzeugnahen Außenbereich des Fahrzeugs (10), und
• positives Erkennen der Fahrberechtigung, wenn zum einen beim Vergleichen gespeicherte biometrische Merkmale für eine Person mit der Fahrberechtigung gefunden werden, welche mit den biometrischen Merkmalen der auf dem Fahrersitz befindlichen Person übereinstimmen, und wenn zum anderen der für das Fahrzeug (10) berechtigte Schlüssel (3) über Funk mittels einer im Innenraum des Fahrzeugs (10) angeordneten Antenne in einem Bereich, welcher den Innenraum und fahrzeugnahen Außenbereich des Fahrzeugs (10) umfasst, erfasst wird,
wobei für den Fall, dass beim Vergleichen keine gespeicherten biometrischen Merkmale für eine Person mit der Fahrberechtigung gefunden werden, die erfassten biometrischen Merkmale für eine Person mit der Fahrberechtigung gespeichert werden, wenn beide folgenden Bedingungen erfüllt sind:
• eine Zustimmung der Person wird erfasst, und
• der für das Fahrzeug (10) berechtigte Schlüssel (3) wird in dem Zündschloss (2) des Fahrzeugs (10) gefunden.

2. Verfahren nach Anspruch 1,
**dadurch gekennzeichnet,**
**dass** das Verfahren umfasst:
positives Erkennen der Fahrberechtigung,
∘ wenn zum einen bei dem Vergleichen gespeicherte biometrische Merkmale für eine Person mit der Fahrberechtigung gefunden werden, welche mit den biometrischen Merkmalen der auf dem Fahrersitz befindlichen Person übereinstimmen, und wenn zum anderen der für das Fahrzeug (10) berechtigte Schlüssel (3) über Funk (6) gefunden wird, oder
∘ wenn der für das Fahrzeug (10) berechtigte Schlüssel (3) in einem Zündschloss (2) des Fahrzeugs (10) gefunden wird.

3. Verfahren nach Anspruch 2, **dadurch gekennzeichnet, dass** der für das Fahrzeug (10) berechtigte Schlüssel (3) nur dann in dem Zündschloss (2) des Fahrzeugs (10) gesucht wird, wenn keine gespeicherten biometrischen Merkmale für eine Person mit der Fahrberechtigung gefunden werden, welche mit den biometrischen Merkmalen der auf dem Fahrersitz befindlichen Person übereinstimmen.

4. Verfahren nach einem der vorherigen Ansprüche,
**dadurch gekennzeichnet,**
**dass** die erfassten biometrischen Merkmale der Person auf eine allgemeine Berechtigung zum Führen eines Fahrzeugs (10) hin untersucht werden, und
**dass** die Fahrberechtigung nur dann positiv erkannt wird, wenn die allgemeine Berechtigung der Person mittels der biometrischen Merkmale der Person erfasst wird.

5. Verfahren nach einem der vorherigen Ansprüche,
**dadurch gekennzeichnet,**
**dass** die biometrischen Merkmale Merkmale eines Gesichts der auf dem Fahrersitz befindlichen Person umfassen, und
**dass** die Merkmale mit einem optischen Sensor (1) erfasst werden, welcher sich im Innenraum des Fahrzeugs (10) befindet.

6. System zur Überprüfung einer Fahrberechtigung für ein Fahrzeug (10),
wobei das System (20) einen Sensor (1), eine Antenne (5) zum Erfassen von Funksignalen (6) eines Schlüssels (3), und eine Steuerung (4) mit einem Speicher umfasst,
wobei die Antenne (5) im Innenraum des Fahrzeugs (10) angeordnet ist,
wobei das System (20) derart ausgestaltet ist, dass die Steuerung (4) mittels der Antenne (5) nach einem für das Fahrzeug (10) berechtigten Schlüssel (3) sucht,
wobei das System (20) derart ausgestaltet ist, dass der Sensor (1) biometrische Merkmale einer Person erfasst, welche sich auf einem Fahrersitz des Fahrzeugs (10) befindet, dass die Steuerung (4) die biometrischen Merkmale mit in dem Speicher gespeicherten biometrischen Merkmalen für mindestens eine Person mit der Fahrberechtigung vergleicht, und dass die Steuerung (4) die Fahrberechtigung positiv erkennt, wenn die Steuerung (4) beim Vergleichen gespeicherte biometrische Merkmale für eine Person mit der Fahrberechtigung findet, und wenn die Steuerung (4) mittels der Antenne (5) Funksignale (6) eines für das Fahrzeug (10) berechtigten Schlüssels (3) in einem Bereich, welcher den Innenraum und fahrzeugnahen Außenbereich des Fahrzeugs (10) umfasst, erfasst, dass das System (20) ein Zündschloss (2) umfasst, und
wobei das System (20) derart ausgestaltet ist, dass das System (20) für den Fall, dass beim Vergleichen keine gespeicherten biometrischen Merkmale für eine Person mit der Fahrberechtigung gefunden werden, die erfassten biometrischen Merkmale für eine Person mit der Fahrberechtigung speichert, wenn beide folgenden Bedingungen erfüllt sind:
• das System (20) erfasst eine Zustimmung der Person, und
• das System (20) findet den für das Fahrzeug (10) berechtigten Schlüssel (3) in dem Zündschloss (2) des Fahrzeugs (10).

7. System nach Anspruch 6,
**dadurch gekennzeichnet,**
**dass** das System (20) derart ausgestaltet ist, dass das System (20) die Fahrberechtigung in folgenden Fällen positiv erkennt:
• wenn die Steuerung (4) beim Vergleichen gespeicherte biometrische Merkmale für eine Person mit der Fahrberechtigung findet, und wenn die Steuerung (4) mittels der Antenne Funksignale eines für das Fahrzeug (10) berechtigten Schlüssels (3) erfasst, und
• wenn die Steuerung (4) den für das Fahrzeug (10) berechtigten Schlüssel (3) in dem Zündschloss (2) erfasst.

8. System nach Anspruch 6 oder 7, **dadurch gekennzeichnet, dass** das System (20) zur Durchführung des Verfahrens nach einem der Ansprüche 1-5 ausgestaltet ist.

9. Fahrzeug mit einem System (20) nach einem der Ansprüche 6-8.

## Claims

1. Method for checking a driving authorization for a vehicle (10),
the method comprising the following steps of:
• capturing biometric features of a person situated on a driver's seat of the vehicle (10),
• comparing the biometric features with stored biometric features for at least one person having the driving authorization,
• searching for a key (3) authorized for the vehicle (10) via radio (6) in the interior and in the area outside the vehicle (10) close to the vehicle, and
• positively identifying the driving authorization if, on the one hand, stored biometric features for a person having the driving authorization which match the biometric features of the person situated on the driver's seat are found during the comparison and if, on the other hand, the key (3) authorized for the vehicle (10) is detected via radio in an area comprising the interior and the area outside the vehicle (10) close to the vehicle by means of an antenna arranged in the interior of the vehicle (10),
wherein, if no stored biometric features for a person having the driving authorization are found during the comparison, the captured biometric features for a person having the driving authorization are stored if the two following conditions are met:
• an approval of the person is detected, and
• the key (3) authorized for the vehicle (10) is found in the ignition lock (2) of the vehicle (10).

2. Method according to Claim 1,
**characterized**
**in that** the method comprises:
positively identifying the driving authorization
∘ if, on the one hand, stored biometric features for a person having the driving authorization which match the biometric features of the person situated on the driver's seat are found during the comparison and if, on the other hand, the key (3) authorized for the vehicle (10) is found via radio (6), or
∘ if the key (3) authorized for the vehicle (10) is found in an ignition lock (2) of the vehicle (10).

3. Method according to Claim 2, **characterized in that** the key (3) authorized for the vehicle (10) is searched for in the ignition lock (2) of the vehicle (10) only when no stored biometric features for a person having the driving authorization which match the biometric features of the person situated on the driver's seat are found.

4. Method according to one of the preceding claims, **characterized**
**in that** the captured biometric features of the person are examined for a general authorization to drive a vehicle (10), and
**in that** the driving authorization is positively identified only when the general authorization of the person is detected by means of the biometric features of the person.

5. Method according to one of the preceding claims, **characterized**
**in that** the biometric features comprise features of a face of the person situated on the driver's seat, and
**in that** the features are captured using an optical sensor (1) which is situated in the interior of the vehicle (10).

6. System for checking a driving authorization for a vehicle (10),
the system (20) comprising a sensor (1), an antenna (5) for capturing radio signals (6) from a key (3), and a controller (4) having a memory,
the antenna (5) being arranged in the interior of the vehicle (10),
the system (20) being configured in such a manner that the controller (4) searches for a key (3) authorized for the vehicle (10) by means of the antenna (5),
the system (20) being configured in such a manner that the sensor (1) captures biometric features of a person situated on a driver's seat of the vehicle (10), that the controller (4) compares the biometric features with biometric features for at least one person having the driving authorization which are stored in the memory, and that the controller (4) positively identifies the driving authorization if the controller (4) finds stored biometric features for a person having the driving authorization during the comparison, and if the controller (4) captures radio signals (6) from a key (3) authorized for the vehicle (10) in an area comprising the interior and area outside the vehicle (10) close to the vehicle by means of the antenna (5),
that the system (20) comprises an ignition lock (2), and
the system (20) being configured in such a manner that, if no stored biometric features for a person having the driving authorization are found during the comparison, the system (20) stores the captured biometric features for a person having the driving authorization if the two following conditions are met:
• the system (20) detects an approval of the person, and
• the system (20) finds the key (3) authorized for the vehicle (10) in the ignition lock (2) of the vehicle (10).

7. System according to Claim 6,
**characterized**
**in that** the system (20) is configured in such a manner that the system (20) positively identifies the driving authorization in the following cases:
• if the controller (4) finds stored biometric features for a person having the driving authorization during the comparison, and if the controller (4) captures radio signals from a key (3) authorized for the vehicle (10) by means of the antenna, and
• if the controller (4) detects the key (3) authorized for the vehicle (10) in the ignition lock (2).

8. System according to Claim 6 or 7, **characterized in that** the system (20) is configured to carry out the method according to one of Claims 1-5.

9. Vehicle having a system (20) according to one of Claims 6-8.

## Revendications

1. Procédé pour contrôler une autorisation de conduire pour un véhicule (10), le procédé comprenant les étapes suivantes :
* acquisition de caractéristiques biométriques d'une personne qui se trouve sur un siège de conducteur du véhicule (10),
* comparaison des caractéristiques biométriques avec des caractéristiques biométriques enregistrées d'au moins une personne possédant l'autorisation de conduire,
* recherche d'une clé (3) autorisée pour le véhicule (10) par voie radioélectrique (6) dans l'espace intérieur et dans la zone extérieure de proximité du véhicule (10), et
* reconnaissance positive de l'autorisation de conduire si, d'une part, la comparaison permet de trouver des caractéristiques biométriques enregistrées d'une personne possédant l'autorisation de conduire qui coïncident avec les caractéristiques biométriques de la personne qui se trouve sur le siège de conducteur et si, d'autre part, la clé (3) autorisée pour le véhicule (10) est détectée par voie radioélectrique au moyen d'une antenne disposée dans l'espace intérieur du véhicule (10) dans une zone qui comprend l'espace intérieur et la zone extérieure de proximité du véhicule (10),
procédé selon lequel, dans le cas où aucune des caractéristiques biométriques enregistrées pour une personne possédant l'autorisation de conduire n'est trouvée lors de la comparaison, les caractéristiques biométriques acquises pour une personne possédant l'autorisation de conduire sont enregistrées lorsque les deux conditions suivantes sont remplies :
* un accord de la personne est détecté et
* la clé (3) autorisée pour le véhicule (10) est trouvée dans le contact d'allumage (2) du véhicule (10).

2. Procédé selon la revendication 1, **caractérisé en ce que** le procédé comprend :
reconnaissance positive de l'autorisation de conduire
∘ si, d'une part, la comparaison permet de trouver des caractéristiques biométriques enregistrées d'une personne possédant l'autorisation de conduire qui coïncident avec les caractéristiques biométriques de la personne qui se trouve sur le siège de conducteur et si, d'autre part, la clé (3) autorisée pour le véhicule (10) est détectée par voie radioélectrique (6), ou
∘ si la clé (3) autorisée pour le véhicule (10) est trouvée dans un contact d'allumage (2) du véhicule (10).

3. Procédé selon la revendication 2, **caractérisé en ce que** la clé (3) autorisée pour le véhicule (10) n'est recherchée dans le contact d'allumage (2) du véhicule (10) que si aucune des caractéristiques biométriques enregistrées pour une personne possédant l'autorisation de conduire n'est trouvée qui coïncide avec les caractéristiques biométriques de la personne qui se trouve sur le siège de conducteur.

4. Procédé selon l'une des revendications précédentes, **caractérisé**
**en ce que** les caractéristiques biométriques acquises de la personne sont examinées pour vérifier si elles contiennent une autorisation générale de conduire un véhicule (10), et
**en ce que** l'autorisation de conduire n'est reconnue positive que si l'autorisation générale de la personne est détectée au moyen des caractéristiques biométriques de la personne.

5. Procédé selon l'une des revendications précédentes, **caractérisé**
**en ce que** les caractéristiques biométriques comprennent des caractéristiques d'un visage de la personne qui se trouve sur le siège du conducteur, et
**en ce que** les caractéristiques sont acquises avec un capteur optique (1) qui se trouve dans l'espace intérieur du véhicule (10).

6. Système pour contrôler une autorisation de conduire pour un véhicule (10), le système (20) comprenant un capteur (1), une antenne (5) destinée à détecter des signaux radioélectriques (6) d'une clé (3), et une commande (4) munie d'une mémoire,
l'antenne (5) étant disposée dans l'espace intérieur du véhicule (10),
le système (20) étant configuré de telle sorte que la commande (4) recherche à l'aide de l'antenne (5) une clé (3) autorisée pour lé véhicule (10),
le système (20) étant configuré de telle sorte que le capteur (1) acquiert des caractéristiques biométriques d'une personne qui se trouve sur un siège de conducteur du véhicule (10), la commande (4) comparant les caractéristiques biométriques avec des caractéristiques biométriques enregistrées dans la mémoire d'au moins une personne possédant l'autorisation de conduire,
et la commande (4) reconnaissant positivement l'autorisation de conduire si la commande (4), lors de la comparaison, trouve des caractéristiques biométriques enregistrées d'une personne possédant l'autorisation de conduire et si la commande (4), au moyen de l'antenne (5), détecte des signaux radioélectriques (6) d'une clé (3) autorisée pour le véhicule (10) dans une zone qui comprend l'espace intérieur et la zone extérieure de proximité du véhicule (10),
le système (20) comprenant un contact d'allumage (2) et le système (20) étant configuré de telle sorte que le système (20), dans le cas où aucune des caractéristiques biométriques enregistrées pour une personne possédant l'autorisation de conduire n'est trouvée lors de la comparaison, enregistre les caractéristiques biométriques acquises pour une personne possédant l'autorisation de conduire lorsque les deux conditions suivantes sont remplies :
* le système (20) détecte un accord de la personne et
* le système (20) trouve la clé (3) autorisée pour le véhicule (10) dans le contact d'allumage (2) du véhicule (10).

7. Système selon la revendication 6, **caractérisé en ce que** le système (20) est configuré de telle sorte que le système (20) reconnaît positivement l'autorisation de conduire dans les cas suivantes :
* si la commande (4), lors de la comparaison, trouve des caractéristiques biométriques enregistrées d'une personne possédant l'autorisation de conduire et si la commande (4), au moyen de l'antenne, détecte les signaux radioélectriques d'une clé (3) autorisée pour le véhicule (10), et
* si la commande (4) détecte la clé (3) autorisée pour le véhicule (10) dans le contact d'allumage (2).

8. Système selon la revendication 6 ou 7, **caractérisé en ce que** le système (20) est configuré pour mettre en oeuvre le procédé selon l'une des revendications 1 à 5.

9. Véhicule équipé d'un système (20) selon l'une des revendications 6 à 8.
